# EUROPEAN PATENT SPECIFICATION

(11) **EP 3 831 587 B1**
(45) Date of publication and mention of the grant of the patent: **31.08.2022**
(21) Application number: 20188836.9
(22) Date of filing: 31.07.2020
(51) Int. Cl.: B30B 1/28, B26F 1/40, B26D 7/26, B26D 5/14

(54) **TRIMMING DEVICE FOR AN ELECTRODE FILM OF A SECONDARY BATTERY**
TRIMMVORRICHTUNG FÜR EINEN ELEKTRODENFILM EINER SEKUNDÄRBATTERIE
DISPOSITIF D'ÉBARBAGE POUR FILM D'ÉLECTRODE D'UNE BATTERIE SECONDAIRE

(30) Priority: 04.12.2019 KR 20190159483
(43) Date of publication of application: 09.06.2021
(73) Proprietor: People & Technology Inc., Gyeongsangbuk-do 39373 (KR)
(72) Inventor: KIM, Jun Sub, 39373 Gyeongsangbuk-do (KR); LEE, Young Cheol, 39373 Gyeongsangbuk-do (KR)
(74) Representative: BCKIP

(56) References cited:
- JP-A- H06 170 591
- JP-A- H07 164 198
- KR-A- 20130 073 294

## Description

### FIELD OF THE INVENTION

### 1. Field of the Invention

The present invention relates to a trimming device for an electrode film included in a secondary battery and, more specifically, to a trimming device for an electrode film of a secondary battery which optimally maintains a gap between an upper mold and a lower mold and prevents even a small inclination of the upper and lower molds.

### 2. Description of the Related Art

A lithium secondary battery, used as a power source for various mobile electronic devices, has many advantages such as a high operation voltage as well as a high energy density per unit weight, and has no memory effect such that it can be recharged even when it is not fully discharged and charged at a certain level. In addition, it can be manufactured in small sizes and thus is adopted for small electronic device such as a tablet PC and a laptop computer as well as a smartphone.

The lithium secondary battery is manufactured by: manufacturing an anode plate and a cathode plate by applying an active material on an anode current collector having a metal foil shape and applying a cathode active material on a cathode current collector having a metal foil shape; inserting a separator between the anode plate and the cathode plate; inserting the result into a rectangular or cylindrical container or into an aluminum pouch; filling the result with an electrolyte; and sealing the container or pouch.

The current collector in the metal thin film shape is manufactured by trimming a material with a predetermined width, which is successively supplied, while the material passes through a press mold. The press mold includes an upper mold having a punch and a lower mold having a punch hole and trims the material while the strap-shaped material passes between the upper and lower molds so as to obtain the current collector of a desired shape.

By the way, the thickness of the current collector ("electrode film", hereinafter) is very small, which requires the punch and the punch hole to be accurately aligned in order to obtain a successful cutting. For example, when the punch or the punch hole is eroded, the cutting surface is not smooth and burrs can remain on the cutting surface. The burrs remaining on the electrode film can, during the operation of the battery, penetrates the separator due to the expansion of the electrode film, and comes to touch the opposite electrode, which causes an internal short-circuit.

For this reason, an accurate cutting of the electrode film becomes crucial, and it is normal that the mold is periodically polished for the accurate cutting. However, the length of the punch becomes shortened as the mold is polished again and again, which makes the gap between the punch and the punch hole grow bigger. As the gap grows bigger, the punch cannot be fully inserted into the punch hole, which makes an inaccurate cutting. Therefore, a stroke length of the mold should be finely increased along with the polishing. On the other hand, the conventional electrode film manufacturing device is poor at finely adjusting the gap between the molds.

### Cited References

### Patent References

Korean patent publication pamphlet No. 10-0901540 (title, "LITHIUM ION SECONDARY BATTERY ELECTRODE BOUNDARY PORTION ELIMINATION EQUIPMENT")

Korean patent publication pamphlet No. 10-1660203 (title, "SECONDARY BATTERY MANUFACTURING METHOD, AND ELECTRODE SHEET CUTTING APPARATUS") Document KR 20130073294A discloses a trimming device for an electrode film of a secondary battery comprising: a frame for providing a supporting force; a plurality of vertical columns which are supported by the frame, are extended vertically, and can be raised and lowered; a driving unit; an elevation force transfer unit; an upper elevated body which includes an upper mold; a lower elevated body which is arranged under the upper elevated body to be spaced apart therefrom and includes a lower mold corresponding with the upper mold; a fine adjusting unit which, when necessary, adjusts a gap between the upper mold and the lower mold.

### SUMMARY OF THE INVENTION

The present invention has been implemented in order to solve the aforementioned problems, and the objectives of the present invention is to maintain an optimum gap between the punch and the punch hole even after the punch is repeatedly polished so as to enable an effective trimming, to prevent an inclination and traverse directional vibrations of the upper and lower molds during operation, and to improve an overall operation accuracy.

The trimming device for an electrode film of a secondary battery, as a means to solve the problems in order to accomplish the objectives of the present invention, comprises, as defined in claim 1: a frame for providing a supporting force; a plurality of vertical columns which are supported by the frame, are extended vertically, and can be raised and lowered; a pair of main shafts which are supported horizontally, can rotate axially, and has a plurality of first eccentric axis portions and second eccentric axis portions having mutually different rotational center axes; a driving unit which axially rotates the respective main shafts, simultaneously; an elevation force transfer unit which is installed on a lower portion of the main shaft and coupled with a bottom portion of the vertical column; an upper elevated body which is horizontally installed with an upper portion of the main shaft, is coupled with a top portion of the vertical column, and includes an upper mold; a lower elevated body which is arranged under the upper elevated body to be spaced apart therefrom, is supported by the vertical column, is capable of a sliding motion with respect to the vertical column, and includes a lower mold corresponding with the upper mold; a fine adjusting unit which is provided under the elevation force transfer unit and, when necessary, adjusts a gap between the upper mold and the lower mold; a plurality of first connecting arms which are coupled with the first eccentric axis portion of the main shaft, extend downwards to be linked with the elevation force transfer unit, and are driven by the axial rotation of the main shaft so as to provide an up-down motion for the elevation force transfer unit, the fine adjusting unit, the vertical columns, and the upper elevated body; and a plurality of second connecting arms which are coupled with the second eccentric axis portion of the main shaft, extended upwards to be coupled with the lower elevated body, and driven by the axial rotation of the main shaft so as to raise or lower the lower elevated body.

A number of optional additional features are now listed:
In addition, a support axis portion, which has the same rotational center axis as the rotational center axis of the main shaft itself and is supported on the frame by way of a shaft anti-vibration member, is formed on the main shaft, the first and second eccentric axis portions make pairs with each other and are arranged at opposite sides from the support axis portion, and a center of the first eccentric axis portion and a center of the second eccentric axis portion are positioned at 180 degrees from the rotational center axis.

In addition, the driving unit comprises: a main motor which axially rotates the main shaft; pulleys which are fixed at end portions of respective main shafts; and a timing belt which couples the pulleys with each other such that the main shafts rotate axially at the same speed.

Also, the first connecting arm comprises a shaft coupling portion which is engaged with the first eccentric axis portion, and an extension portion which is integrated with the shaft coupling portion, extends downwards, and has a link hole at an extension end portion thereof, the elevation force transfer unit comprises: an elevating plate having a shape of a rectangular plate, wherein a plurality of vertical paths, which enable the extension portion of the first connecting arm to pass downwards therethrough, are formed in the elevating plate; and an arm holder which is fixed on a bottom surface of the elevating plate and has an adjusting shaft hole which corresponds with the link hole at the bottom of the extension portion which has passed through the vertical path, and the fine adjusting unit is arranged horizontally under the respective main shafts in the vertical direction, penetrates the link hole and the adjusting shaft hole so as to link the first connecting arm to the elevation force transfer unit, and includes: a pair of adjusting shafts having fine eccentric axis portions which are inserted into the link hole; and, a gap adjusting motor which axially rotates the respective adjusting shafts, simultaneously.

In addition, the fine eccentric axis portion is a portion having an eccentric axis deviated from the rotational center axis of the adjusting shaft itself, and rotates axially while touching an inner circumferential surface of the link hole so as to change the height of the elevation force transfer unit.

In addition, pulleys are fixed at the end portion of the respective adjusting shafts, and the pulleys are connected with each other by way of the timing belt which rotates the adjusting shaft at the same rotation speed.

In addition, the second connecting arm includes: a shaft coupling portion which is engaged with the second eccentric axis portion of the main shaft; and an extension portion which is integrated with the shaft coupling portion, and extends upwards to be pin-coupled with the lower elevated body.

The trimming device for an electrode film of a secondary battery as above is capable of a fine adjust on the gap between the upper mold and the lower mold, which optimally maintains, even after repeated wearing of a punch, a gap between the punch and a punch hole, thereby enabling an effective trimming.

In addition, the elevation motion of the upper and lower molds is realized by two sets of symmetrical connecting arms, which are connected with each other by way of a timing belt, which prevents, during operation, the upper and lower molds from being inclined, and suppresses the horizontal direction vibration, thereby improving the overall operation accuracy.

### BRIEF DESCRIPTION OF THE DRAWINGS

FIG. 1 is a front view of a trimming device for an electrode film of a secondary battery according to a first embodiment of the present invention;
FIG. 2 is a side view of the trimming device shown in FIG. 1;
FIG. 3 is a cross-sectional view of FIG. 2 along a line □-□;
FIG. 4 is a perspective view separately showing the main shaft in FIG. 2.
FIG. 5A, FIG. 5B, and FIG. 5C are cross-sectional views along a line A-A, a line B-B, and a line C-C in FIG. 4, respectively.
FIG. 6 is a cross-sectional view of FIG. 2 along a line □-□;
FIG. 7 is a diagram for describing the structure of the fine adjusting unit shown in FIG. 2.
FIGS. 8A and 8B are diagrams for describing the operation principles of the fine adjusting unit in FIG. 7.

### DETAILED DESCRIPTION OF THE INVENTION

In the following, an embodiment of the present invention will be explained in detail by referring to the appended figures.

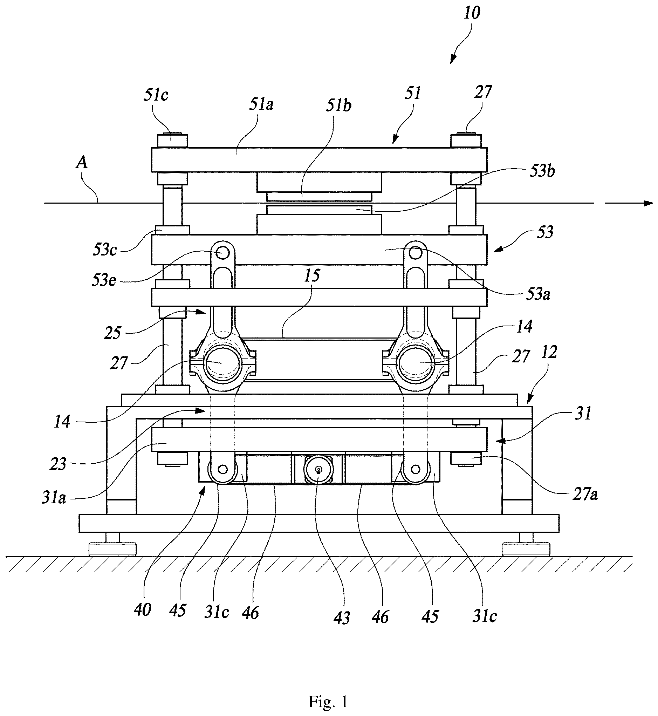

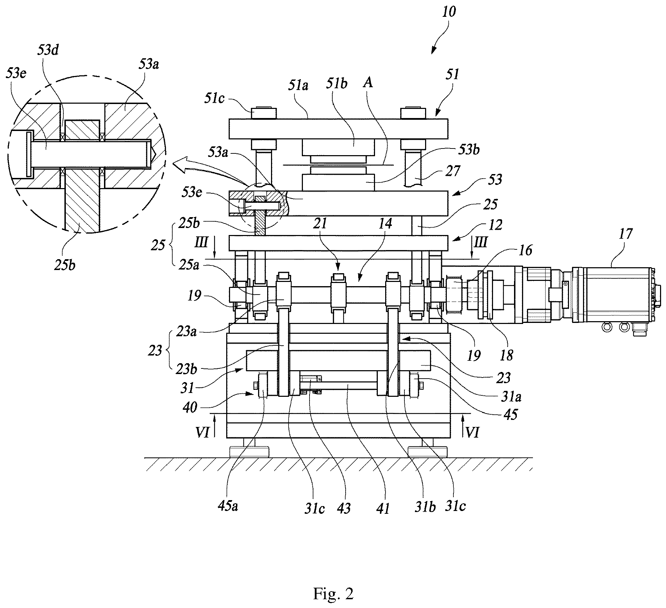

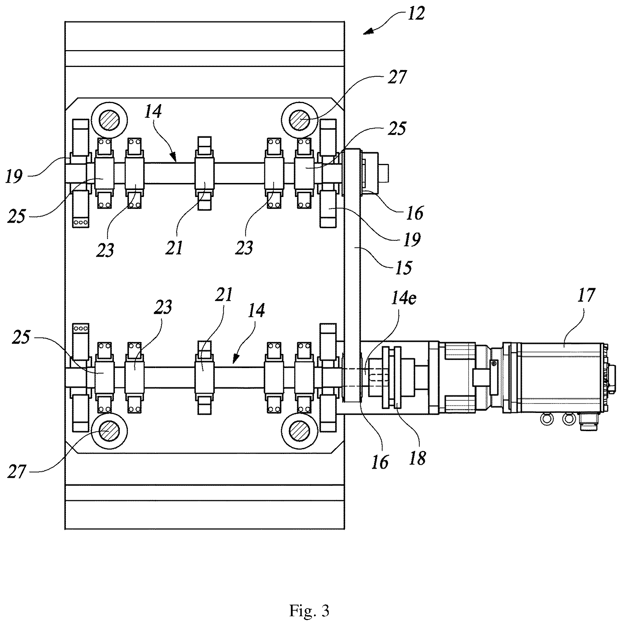

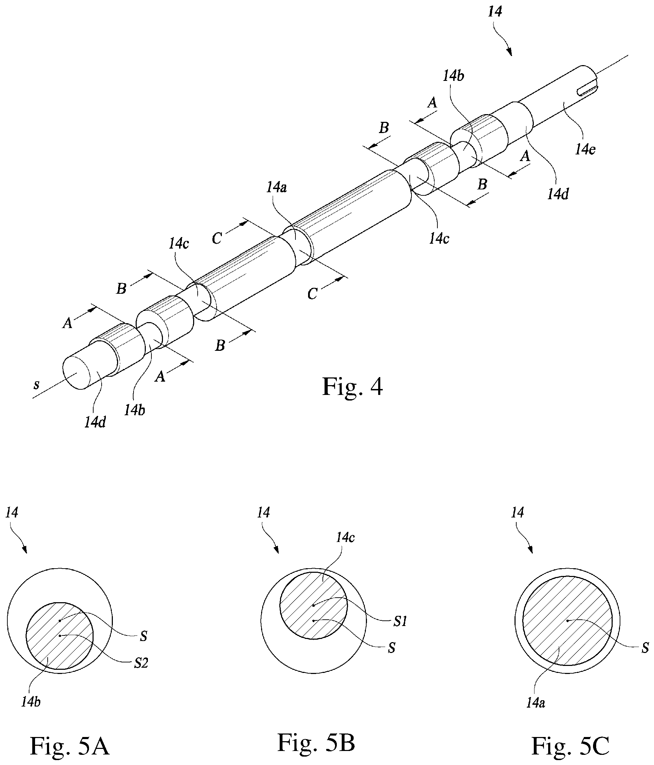

FIG. 1 is a front view of a trimming device for an electrode film of a secondary battery according to a first embodiment of the present invention, and FIG. 2 is a side view of the trimming device shown in FIG. 1. In addition, FIG. 3 is a cross-sectional view of FIG. 2 along a line □-□, and FIG. 4 is a perspective view separately showing the main shaft in FIG. 2. And,

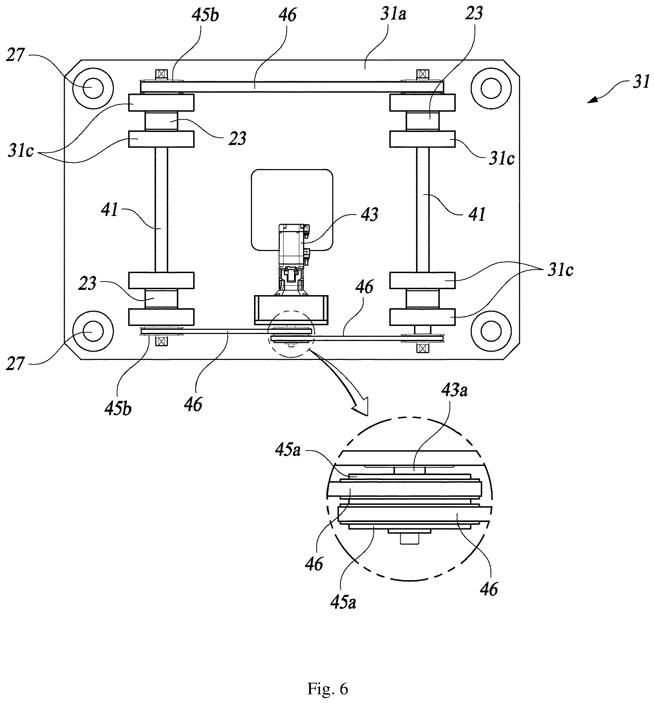

FIG. 5A, FIG. 5B, and FIG. 5C are cross-sectional views along a line A-A, a line B-B, and a line C-C in FIG. 4, respectively, and FIG. 6 is a cross-sectional view of FIG. 2 along a line □-□.

As shown in the figures, the trimming device for an electrode film of a secondary battery 10 includes a frame 12, four vertical columns 27, a main shaft 14, a driving unit, an elevation force transfer unit 31, a fine adjusting unit 40, an upper elevated body 51, a lower elevated body 53, a first connecting arm 23, and a second connecting arm 25.

The frame 12 is arranged on a transfer path of the electrode film material A and supports the vertical column 27 vertically and the main shaft 14 horizontally.

The vertical columns 27 are a circular bar-type member which is supported on the frame 12 and extended vertically. Four vertical columns have the same size. Virtual straight lines on a horizontal plane which connect center axis lines of the vertical columns 27 form a quadrangle shape. Also, upper and lower end portions of the vertical column 27 are coupled with the elevating plates 51a and 31a, which are to be explained in the following, so as to form one body, and moves up and down by the first connecting arm 23. Since an upper mold 51b is fixed on a bottom surface of an elevating plate 51a, the upper mold 51b can move up and down over the electrode film material A.

Two main shafts 14 are horizontally supported to be parallel with respect to each other between the vertical columns 27, and receive the rotational force from the driving unit so as to axially rotate in the same direction simultaneously.

The structure of the main shaft 14 will be explained with respect to FIG. 4 and FIGS. 5A and 5C.

As shown in the figures, the main shaft 14 is extended in the length direction and includes a bearing fitting portion 14d at one end and a bearing fitting portion 14d and motor connecting unit 14e at the other end.

As shown in FIG. 2, the fitting portion 14d is a portion where a bearing 19, which enables the main shaft 14 to be supported on the frame 12, is fixed. Also, a pulley 16 and a portion of a coupler 18 are fixed on the motor connecting unit 14e. The coupler 18 is a mechanical component for connecting the main shaft 14 with a driving axis of a main motor 17. The coupler 18 is not mounted on a side main shaft 14 which is not directly connected with the main motor.

The pulleys 16 have the same diameter and are connected with each other by way of a timing belt 15. The timing belt 15 delivers the rotational force of one main shaft 14 to another main shaft 14. Since the pulleys 16 have the same size, the rotation speeds of the main shafts 14 are the same.

In addition, a support axis portion 14a, a first eccentric axis portion 14c, and a second eccentric axis portion 14b are provided on the main shaft 14.

The support axis portion 14a has the same rotational center axis as the rotational center axis S of the main shaft 14 itself, and is filled with the shaft anti-vibration member 21. The shaft anti-vibration member 21 is a member which is fixed on the frame 12 while surrounding the support axis portion 14a such that the support axis portion 14a can more axially, and prevents the main shaft 14 from vibrating during rotation. It is for sure that a bearing is provided at a position where the support axis portion 14a touches the support axis portion 14a.

In addition, the first eccentric axis portion 14c is connected with the first connecting arm 23 and the second eccentric axis portion 14b is connected with the second connecting arm 25. The first eccentric axis portion 14c and the second eccentric axis portion 14b make pairs and are arranged at opposite sides symmetrically with respect to each other from the support axis portion 14a.

A first eccentric axis S1, which is the center axis of the first eccentric axis portion 14c, and a second eccentric axis S2, which is a rotational center axis of the second eccentric axis portion 14b, are arranged at 180 degrees from the rotational center axis S. The rotational center axis S is the rotational center axis of the main shaft 14 itself.

In addition, the first eccentric axis S1 of the first eccentric axis portion 14c, which is positioned left with respect to the support axis portion 14a, and the first eccentric axis S1 of the right first eccentric axis portion 14c coincide. In the same manner, the second eccentric axis S2 of the second eccentric axis portion 14b positioned left with respect to the support axis portion 14a and the second eccentric axis S2 of the right second eccentric axis portion 14b also coincide.

Furthermore, installation directions of the two main shafts 14 also coincide. In other words, when the first eccentric axis portion 14c of one side main shaft 14 points in the 12 o'clock direction, the first eccentric axis portion 14c of the other side main shaft 14 also points in the 12 o'clock direction.

Meanwhile, the driving unit axially rotates the both side main shafts 14 simultaneously in the same direction, and includes a main motor 17, which is directly connected with one side main shaft 14 by way of a coupler 18, pulleys 16, which are fixed at end portions of both side main shafts, and a timing belt 15 which connects the both side pulleys with each other. The timing belt 15 connects the pulleys 16 of the both side main shafts 14 with each other and delivers the rotational force of the main motor 17 to the both side main shafts 14 simultaneously.

In addition, elevation force transfer unit 31 is mounted at a lower portion of the main shaft 14 and coupled with the vertical column 27 and the bottom portion of the first connecting arm 23, and, when the main shaft 14 axially rotates, the elevation force transfer unit 31 receives the elevation force of the first connecting arm 23 and delivers the same to the vertical column 27.

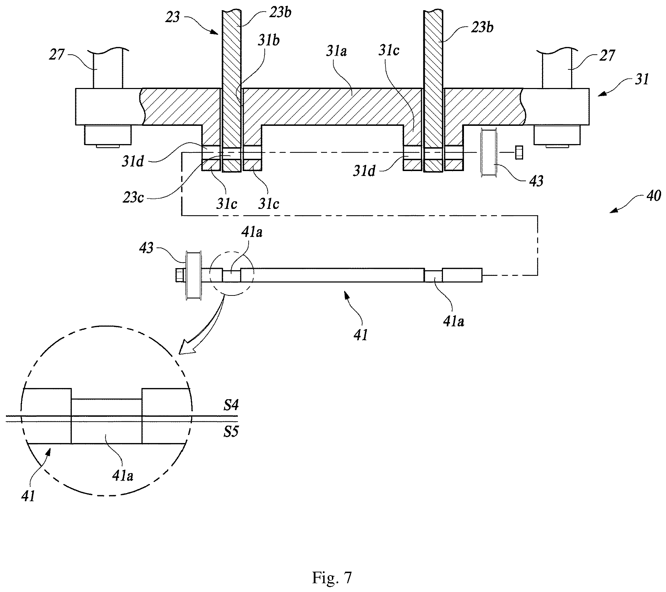

The elevation force transfer unit 31 includes an elevating plate 31a and an arm holder 31c. The elevating plate 31a has a shape of a rectangular plate and provides vertical paths 31b which enable extension portions 23b of four first connecting arms 23 to pass downwards. Also, the arm holder 31c is fixed at a bottom surface of the elevating plate 31a and positioned at a lower side of the respective vertical paths 31b, and includes an adjusting shaft hole 31d as shown in FIG. 7.

The adjusting shaft hole 31d is a hole corresponding with a link hole 23c at the bottom of the extension portion, which has passed downwards through the vertical path 31b, and enables the adjusting shaft 41 to pass therethrough. The elevation force transfer unit 31 and the first connecting arm 23 are linked by the adjusting shaft 41.

Meanwhile, the fine adjusting unit 40 serves to finely adjust the gap of the elevating plate 31a with respect to the main shaft 14. As mentioned above, since the elevating plate 31a, the vertical column 27, and the upper elevated body 51 are coupled with one another to form one entity, when the gap of the elevating plate 31a with respect to the main shaft 14 is increased by 1 mm, the upper mold 51b, which is fixed on the upper elevated body 51, is lowered by 1 mm so as to be operated.

That is, it is possible to adjust the gap of the upper mold 51b with respect to the lower mold 53b by means of the fine adjusting unit 40. The fine adjusting unit 40 is operated when the main shaft 14 is stationary.

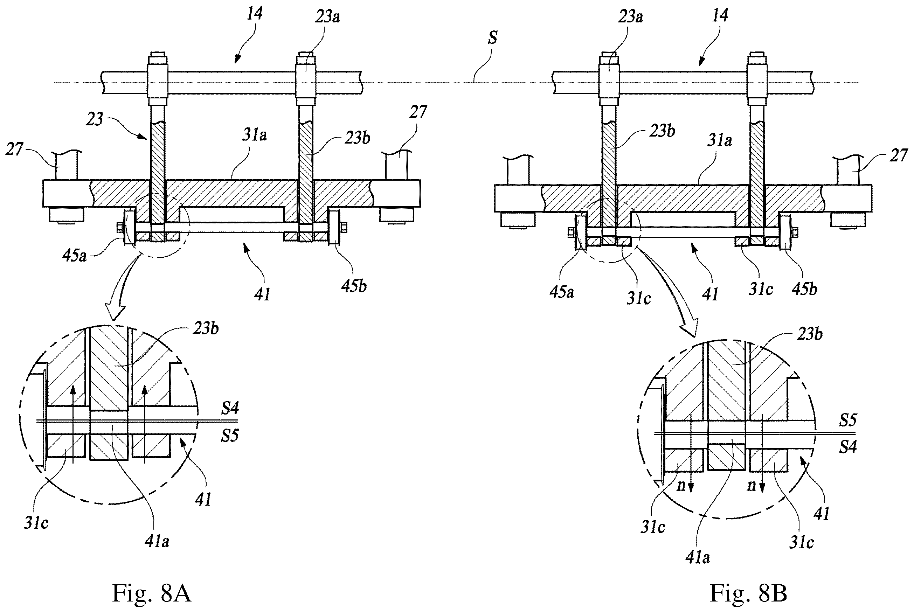

FIG. 7 is a diagram for describing a portion of the structure of the fine adjusting unit 40 and FIGS. 8A and 8B are diagrams for describing the operation principles of the fine adjusting unit.

As shown in the figures, the fine adjusting unit 40 includes an adjusting shaft 41, which is arranged horizontally at a lower portion of the respective main shafts 14 in the vertical direction, and a gap adjusting motor (see 43 in FIG. 2) which axially rotates the adjusting shafts 41 at the same time. The gap adjusting motor 43 is fixed at a lower portion of the elevating plate 31a.

The adjusting shaft 41 is a circular bar-type member having a predetermined diameter, penetrates the adjusting shaft hole 31d and the link hole 23c, and serves to link the first connecting arm 23 to the elevation force transfer unit 31.

In addition, two fine eccentric axis portions 41a are provided at the respective adjusting shafts 41. The fine eccentric axis portion 41a is a predetermined portion having an eccentric axis S5, which is deviated from the center axis S4 of the adjusting shaft 41 itself, as a center axis. The fine eccentric axis portion 41a also has a predetermined diameter. The fine eccentric axis portion 41a meets the inner circumferential surface of the link hole 23c and axially rotates inside the link hole 23c.

Driven pulleys 45b of the same side are mounted at both side ends of the respective adjusting shafts 41. The driven pulleys 45b are connected with each other by way of the timing belt 46. As specifically shown in FIG. 6, the gap adjusting motor 43 is mounted in the middle of the adjusting shaft 41. The gap adjusting motor 43 is provided for the axial rotation of the both side adjusting shafts 41, and has two driving pulleys 45a at a driving axis 43a.

One driving pulley 45a of the two driving pulleys 45a is connected to the left driven pulley 45b, and the rest driving pulley 45a corresponds with the right driving pulley 45a and is connected to the one driving pulley by way of the timing belt 46. As a result, both side adjusting shafts 41 simultaneously come to rotate axially at the same speed by one gap adjusting motor 43.

The gap adjustment between the upper and lower molds 51b and 53b by means of the fine adjusting unit 40 is made possible because the gap between the main shaft 14 and the fine eccentric axis portion 41a is maintained constant by the first connecting arm 23, and the fine eccentric axis portion 41a is engaged at the bottom portion of the first connecting arm 23.

For example, when the adjusting shaft 41 rotates axially from the state shown FIG. 8A, the adjusting shaft 41 comes to rotate axially around the eccentric axis S5 as the center axis. In the meantime, the aforementioned center axis S4 comes to revolve around the eccentric axis S5. That is, the center axis S4 comes to be an eccentric axis, and the eccentric axis S5 comes to be a substantial center axis.

As shown in FIG. 8A, when the adjusting shaft 41 rotates by 180 degrees from the state in which the center axis S4 of the adjusting shaft 41 itself is positioned vertically above the eccentric axis S5 of the fine eccentric axis portion 41a, the center axis S4 comes to move vertically under the eccentric axis S5 as shown in FIG. 8B. As a result, the arm holder 31c supporting the adjusting shaft 41 is lowered in the direction of the arrow n. When the adjusting shaft 41 rotates again by 180 degrees from this state, the arm holder 31c is raised again.

Finally, it is possible to adjust the height of the elevation force transfer unit 31 by means of the rotation motion of the adjusting shaft 41. Since the elevation force transfer unit 31 forms one entity with the upper elevated body 51 by means of the vertical column 27, the height of the upper mold 51b is adjusted.

Meanwhile, the upper elevated body 51 includes an elevating plate 51a with a rectangular plate shape and fixing bosses 51c provided at four corners of the elevating plate 51a. The fixing bosses 51c serve to fix the elevating plate 51a at the vertical columns 27. Also, the upper mold 51b is fixed at the lower portion of the elevating plate 51a. As described in the above, since the upper elevated body 51 is connected with the elevation force transfer unit 31 by way of the vertical column 27, the height variation of the elevation force transfer unit 31 is reflected on the height of the upper elevated body 51.

The lower elevated body 53 is arranged under the upper elevated body 51 to be space apart therefrom. Although four corners are supported by the vertical columns 27, the lower elevated body can slide along the vertical columns. The lower elevated body 53 includes an elevating plate 53a with a rectangular plate shape and guide bosses 53c which are mounted at four corners of the elevating plate 53a.

The guide boss 53c is a cylindrical member enabling the vertical column 27 to pass therethrough, and can slide on the outer circumferential surface of the vertical column 27. The upper elevated body can move relatively with respect to the vertical column 27.

In addition, four fitting holes 53d are provided in the elevating plate 53a. The fitting hole 53d is a space into which the extension end portion of the second connecting arm 25 is inserted, and the extension end portion is fixed by a fixing pin 53e while inserted into the fitting hole 53d. Also, the lower mold 53b is mounted on an upper surface of the elevating plate 53a. The lower mold 53b is positioned under the upper mold 51b in the vertical direction, and enables an electrode film material A to pass between the same and the upper mold.

Four first connecting arms 23 are applied in total, and extended downwards while coupled with the first eccentric axis portions 14c of the main shafts 14, respectively, so as to be linked with the fine eccentric axis portion 41a. The first connecting arm 23 delivers the rotational force of the first eccentric axis portion 14c to the adjusting shaft 41.

For reference, the adjusting shaft 41 remains fixed while the main shaft 14 rotates axially. It is because the gap between the upper and lower molds is not adjusted when the upper and lower molds 51b and 53b are punching on the electrode film material A.

The first connecting arm 23 includes a shaft coupling portion 23a, which is engaged with the first eccentric axis portion 14c, and an extension portion 23b which is integrated with the shaft coupling portion 23a, is extended downwards, and has the link hole (see 23c in FIG. 7) at the extension end portion. The first connecting arm is driven by the axial rotation of the main shaft and raises or lowers the elevation force transfer unit, the fine adjusting unit, the vertical column, and the upper elevated body.

The second connecting arm 25 is coupled with the second eccentric axis portion 14b of the main shaft 14, is extended upwards to be connected with the lower elevated body 53, and is driven by the axial rotation of the main shaft so as to raise or lower the lower elevated body 53.

This second connecting arm 25 includes a shaft coupling portion 25a, which is engaged with the second eccentric axis portion 14b of the main shaft 14, and an extension portion 25b which is integrated with the shaft coupling portion 25a and extended upwards so as to be coupled with the lower elevated body by means of the fixing pin 53e.

The operation of the trimming device for an electrode film of a secondary battery 10 with the configuration shown in the above is as follows.

At first, the electrode film material A passes between the upper and lower molds 51b and 53b and trimmed such that an electrode film with a desired shape is obtained. In order to accomplish this, it is for sure that the upper and lower molds 51b and 53b are to be repeatedly raised and lowered. In other words, the lower mold 53b is raised when the upper mold 51b is lowered, and the lower mold 53b is lowered when the upper mold 51b is raised.

The up and down motion of these upper and lower molds 51b and 53b are realized by operating the main motor 17. That is, when the main motor 17 is operated, the rotational force of the main motor is delivered to both side main shafts 14 by way of the timing belt 15, and the rotational force of the main shaft 14 passes through the first connecting arm 23 and the second connecting arm 25 so as to be delivered to the elevation force transfer unit 31 and the lower elevated body 53, thereby realizing the up and down motion (the elevation force transfer unit is connected with the upper elevated body 51 by way of the vertical column 27.)

As a result, the operation of the upper and lower molds is realized and the electrode film material is trimmed by driving one main motor 17.

Meanwhile, when the upper and lower molds are used for a long time and it is necessary to decrease the gap between the molds, the main motor 17 is stopped first and the gap between the upper mold 51b and the lower mold 53b is decreased by using the fine adjusting unit 40.

That is, the adjusting shaft 41 is rotated such that the center axis S4, which has reached the maximum height, is lowered. It is for sure that the arm holder 31c also is lowered as the center axis S4 is lowered. The amount of lowering of the center axis changes as necessary. When the fine adjustment as above is completed, the gap adjusting motor 43 is stopped, and the trimming process commences again.

In the above the present invention has been described in detail by referring to specific embodiments. However, the present invention is not limited to the embodiments and can be varied or modified by a person skilled in the art within the scope of the claims.

**NUMERICAL SYMBOLS**

| | |
|---|---|
| 10: trimming device | 12: frame |
| 14: main shaft | 14a: support axis portion |
| 14b: second eccentric axis portion | 14c: first eccentric axis portion |
| 14d: bearing fitting portion | 14e: motor connecting unit |
| 15: timing belt | 16: pulley |
| 17: main server | 18: coupler |
| 19: bearing | 21: shaft anti-vibration member |
| 23: first connecting arm | 23a: shaft coupling portion |
| 23b: extension portion | 23c: link hole |
| 25: second connecting arm | 25a: shaft coupling portion |
| 25b: extension portion | 27: vertical column |
| 31: elevation force transfer unit | 31a: elevating plate |
| 31b: vertical path | 31c: arm holder |
| 31d: adjusting shaft hole | 40: fine adjusting unit |
| 41: adjusting shaft | 41a: fine eccentric axis portion |
| 43: gap adjusting motor | 43a: driving axis |
| 45a: driving pulley | 45b: driven pulley |
| 46: timing belt | 51: upper elevated body |
| 51a: elevating plate | 51b: upper mold |
| 51c: fixing boss | 53: lower elevated body |
| 53a: elevating plate 53b: lower mold | 53c: guide boss 53d: fitting hole |
| 53e: fixing pin | S: rotational center axis |
| S1: first eccentric axis | S2: second eccentric axis |
| S4: center axis S5: eccentric axis | |

## Claims

1. A trimming device for an electrode film of a secondary battery comprising: a frame (12) for providing a supporting force; a plurality of vertical columns (27) which are supported by the frame, are extended vertically, and can be raised and lowered; a pair of main shafts (14) which are supported horizontally, can rotate axially, and has a plurality of first eccentric axis portions (14c) and second eccentric axis portions (14d) having mutually different rotational center axes; a driving unit (15,16,17) which axially rotates the respective main shafts, simultaneously; an elevation force transfer unit (31) which is installed or a lower portion of the main shaft and coupled with a bottom portion of the vertical column; an upper elevated body (51) which is horizontally installed with an upper portion of the main shaft, is coupled with a top portion of the vertical column, and includes an upper (51b); a lower elevated body (53) which is arranged under the upper elevated body to be spaced apart therefrom, is supported by the vertical column, is capable of a sliding motion with respect to the vertical column, and includes a lower (53b) mold corresponding with the upper mold; a fine adjusting unit (40) which is provided under the elevation force transfer unit and, when necessary, adjusts a gap between the upper mold and the lower mold; a plurality of first connecting arms (23) which are coupled with the first eccentric axis portion (14c) of the main shaft, extend downwards to be linked with the elevation force transfer unit (31), and are driven by the axial rotation of the main shaft so as to provide an up-down motion for the elevation force transfer unit (31), the fine adjusting (40), the vertical columns, and the upper elevated body; and a plurality of second connecting arms (25) which are coupled with the second eccentric axis portion (14d) of the main shaft (14), extended upwards to be coupled with the lower elevated body (53), and driven by the axial rotation of the main shaft so as to raise or lower the lower elevated body.

2. The trimming device for an electrode film of a secondary battery according to claim 1, wherein: a support axis portion (14a), which has the same rotational center axis as the rotational center axis of the main shaft (14) itself and is supported or the frame by way of a shaft anti-vibration member (21), is formed on the main shaft; the first and second eccentric axis portions make pairs with each other and are arranged at opposite sides from the support axis portion; and a center of the first eccentric axis portion and a center of the second eccentric axis portion are positioned at 180 degrees from the rotational center axis.

3. The trimming device for an electrode film of a secondary battery according to claim 1, wherein the driving unit comprises: a main motor (17) which axially rotates the main shaft; pulleys (16) which are fixed at end portions of respective main shafts; and a timing belt (15) which couples the pulleys with each other such that the main shafts rotate axially at the same speed.

4. The trimming device for an electrode film of a secondary battery according to claim 4, wherein the first connecting arm comprises: a shaft coupling portion (23a) which is engaged with the first eccentric axis portion, and an extension portion (23b) which is integrated with the shaft coupling portion, extends downwards, and has a link hole at an extension end portion thereof, the elevation force transfer unit comprises: an elevating plate (53a) having a shape of a rectangular plate, wherein a plurality of vertical paths, which enable the extension portion of the first connecting arm to pass downwards therethrough, are formed in the elevating plate; and an arm holder (31) which is fixed on a bottom surface of the elevating plate and has an adjusting shaft hole which corresponds with the link hole at the bottom of the extension portion which has passed through the vertical path, and the fine adjusting unit (40) is arranged horizontally under the respective main shafts in the vertical direction, penetrates the link hole and the adjusting shaft hole so as to link the first connecting arm to the elevation force transfer unit, and includes: a pair of adjusting shafts (41) having fine eccentric axis portions (41a) which are inserted into the link hole; and, a gap adjusting motor (43) which axially rotates the respective adjusting shafts, simultaneously.

5. The trimming device for an electrode film of a secondary battery according to claim 4, wherein the fine eccentric axis portion (41a) is a portion having an eccentric axis deviated from the rotational center axis of the adjusting shaft itself, and rotates axially while touching an inner circumferential surface of the link hole so as to change the height of the elevation force transfer unit (31).

6. The trimming device for an electrode film of a secondary battery according to claim 5, wherein the pulleys (16) are fixed at the end portion of the respective adjusting shafts, and the pulleys are connected with each other by way of the timing belt (15) which rotates the adjusting shaft at the same rotation speed.

7. The trimming device for an electrode film of a secondary battery according to claim 1, wherein the second connecting arm (25) includes: a shaft coupling portion (25a) which is engaged with the second eccentric axis portion of the main shaft; and an extension portion (25b) which is integrated with the shaft coupling portion, and extends upwards to be pin-coupled with the lower elevated body (53).

## Patentansprüche

1. Trimmvorrichtung für einen Elektrodenfilm einer Akkumulatorbatterie, umfassend:
einen Rahmen (12) zum Bereitstellen einer Stützkraft;
eine Vielzahl von vertikalen Säulen (27), die durch den Rahmen gestützt werden, sich vertikal erstrecken und angehoben und abgesenkt werden können;
ein Paar von Hauptwellen (14), die horizontal gestützt werden, sich axial drehen können und eine Vielzahl von ersten exzentrischen Achsenabschnitten (14c) und zweiten exzentrischen Achsenabschnitten (14b) mit voneinander verschiedenen Rotationsmittelachsen aufweisen;
eine Antriebseinheit (15, 16, 17), die die jeweiligen Hauptwellen gleichzeitig axial dreht;
eine Hebekraftübertragungseinheit (31), die an einem unteren Abschnitt der Hauptwelle installiert und mit einem unteren Abschnitt der vertikalen Säule gekoppelt ist;
einen oberen erhöhten Körper (51), der horizontal bezüglich eines oberen Abschnitts der Hauptwelle installiert ist, mit einem oberen Abschnitt der vertikalen Säule gekoppelt ist und eine obere Form (51b) umfasst;
einen unteren erhöhten Körper (53), der derart unter dem oberen erhöhten Körper angeordnet ist, dass er zu diesem einen Abstand aufweist, durch die vertikale Säule gestützt wird, zu einer Gleitbewegung bezüglich der vertikalen Säule fähig ist und eine untere Form (53b) umfasst, die der oberen Form entspricht;
eine Feineinstelleinheit (40), die unter der Hebekraftübertragungseinheit bereitgestellt ist und, wenn notwendig, einen Spalt zwischen der oberen Form und der unteren Form einstellt;
eine Vielzahl von ersten Verbindungsarmen (23), die mit dem ersten exzentrischen Achsenabschnitt (14c) der Hauptwelle gekoppelt sind, sich derart nach unten erstrecken, dass sie mit der Hebekraftübertragungseinheit (31) verbunden sind, und durch die axiale Drehung der Hauptwelle angetrieben werden, um eine Aufwärts-Abwärts-Bewegung für die Hebekraftübertragungseinheit (31), die Feineinstelleinheit (40), die vertikalen Säulen und den oberen erhöhten Körper bereitzustellen; und
eine Vielzahl von zweiten Verbindungsarmen (25), die mit dem zweiten exzentrischen Achsenabschnitt (14b) der Hauptwelle (14) gekoppelt sind, sich derart nach oben erstrecken, dass sie mit dem unteren erhöhten Körper (53) gekoppelt sind, und durch die axiale Drehung der Hauptwelle angetrieben werden, um den unteren erhöhten Körper anzuheben oder abzusenken.

2. Trimmvorrichtung für einen Elektrodenfilm einer Akkumulatorbatterie gemäß Anspruch 1, wobei:
ein Stützachsenabschnitt (14a), der die gleiche Rotationsmittelachse wie die Rotationsmittelachse der Hauptwelle (14) selbst aufweist und auf dem Rahmen durch ein Wellenantivibrationselement (21) gestützt ist, auf der Hauptwelle ausgebildet ist;
die ersten und zweiten exzentrischen Achsenabschnitte Paare miteinander bilden und an gegenüberliegenden Seiten des Stützachsenabschnitts angeordnet sind; und
eine Mitte des ersten exzentrischen Achsenabschnitts und eine Mitte des zweiten exzentrischen Achsenabschnitts sind um 180 Grad bezüglich der Rotationsmittelachse versetzt sind.

3. Trimmvorrichtung für einen Elektrodenfilm einer Akkumulatorbatterie gemäß Anspruch 1, wobei die Antriebseinheit folgendes umfasst:
einen Hauptmotor (17), der die Hauptwelle axial dreht;
Riemenscheiben (16), die an Endabschnitten jeweiliger Hauptwellen befestigt sind; und
einen Steuerriemen (15), der die Riemenscheiben derart miteinander koppelt, dass sich die Hauptwellen axial mit der gleichen Geschwindigkeit drehen.

4. Trimmvorrichtung für einen Elektrodenfilm einer Akkumulatorbatterie gemäß Anspruch 4, wobei der erste Verbindungsarm folgendes umfasst:
einen Wellenkopplungsabschnitt (23a), der mit dem ersten exzentrischen Achsenabschnitt in Eingriff steht, und einen Verlängerungsabschnitt (23b), der mit dem Wellenkopplungsabschnitt einstückig ausgeführt ist, sich nach unten erstreckt und ein Verbindungsloch an einem Verlängerungsendabschnitt davon aufweist,
wobei die Hebekraftübertragungseinheit folgendes umfasst:
eine Hebeplatte (53a), die eine Form einer rechteckigen Platte aufweist, wobei eine Vielzahl von vertikalen Pfaden, die es dem Verlängerungsabschnitt des ersten Verbindungsarms ermöglichen, sich durch diese hindurch nach unten zu bewegen, in der Hebeplatte ausgebildet sind; und
einen Armhalter (31), der an einer Bodenfläche der Hubplatte befestigt ist und ein Einstellwellenloch aufweist, das dem Verbindungsloch am Boden des Verlängerungsabschnitts entspricht, der sich durch den vertikalen Pfad hindurch bewegt hat, und
wobei die Feineinstelleinheit horizontal unter den jeweiligen Hauptwellen in der vertikalen Richtung angeordnet ist, das Verbindungsloch und das Einstellwellenloch durchdringt, um den ersten Verbindungsarm mit der Hubkraftübertragungseinheit zu verbinden, und folgendes umfasst:
ein Paar Einstellwellen (41) mit feinen exzentrischen Achsenabschnitten (41a), die in das Verbindungsloch eingesetzt sind; und
einen Spalteinstellmotor (43), der die jeweiligen Einstellwellen gleichzeitig axial dreht.

5. Trimmvorrichtung für einen Elektrodenfilm einer Akkumulatorbatterie gemäß Anspruch 4,
wobei der feine exzentrische Achsenabschnitt (41a) ein Abschnitt mit einer exzentrischen Achse ist, die von der Drehmittelachse der Einstellwelle selbst abweicht, und sich axial dreht, während er eine Innenumfangsfläche des Verbindungslochs berührt, um die Höhe der Hebekraftübertragungseinheit (31) zu ändern.

6. Trimmvorrichtung für einen Elektrodenfilm einer Akkumulatorbatterie gemäß Anspruch 5,
wobei die Riemenscheiben (16) am Endabschnitt der jeweiligen Einstellwellen befestigt sind, und die Riemenscheiben mittels des Steuerriemens (15) miteinander verbunden sind, der die Einstellwelle mit der gleichen Drehgeschwindigkeit dreht.

7. Trimmvorrichtung für einen Elektrodenfilm einer Akkumulatorbatterie gemäß Anspruch 1, wobei der zweite Verbindungsarm (25) folgendes umfasst:
einen Wellenkopplungsabschnitt (25a), der mit dem zweiten exzentrischen Achsenabschnitt der Hauptwelle in Eingriff steht; und
einen Verlängerungsabschnitt (25b), der mit dem Wellenkopplungsabschnitt einstückig ausgeführt ist und sich nach oben erstreckt, um mit dem unteren erhöhten Körper (53) mittels eines Stifts gekoppelt zu werden.

## Revendications

1. Dispositif d'ébarbage pour un film d'électrode d'une batterie secondaire, comprenant : un cadre (12) procurant une force de support ; une pluralité de colonnes verticales (27) supportées par le cadre, s'étendant verticalement, et pouvant être montées et descendues ; une paire d'arbres principaux (14) supportés horizontalement, pouvant être rotatifs axialement, et comportant une pluralité de premières parties d'axe excentrique (14c) et de deuxièmes parties d'axe excentrique (14b) ayant des axes de rotation centraux différents les uns des autres ; une unité d'entraînement (15, 16, 17) entraînant axialement en rotation les arbres principaux respectifs, simultanément ; une unité de transfert de force d'élévation (31) montée sur une partie inférieure de l'arbre principal et raccordée à une partie inférieure de la colonne verticale ; un corps surélevé supérieur (51) monté horizontalement avec une partie supérieure de l'arbre principal, raccordé à une partie supérieure de la colonne verticale, et comprenant une matrice supérieure (51b) ; un corps surélevé inférieur (53) disposé sous le corps surélevé supérieur de manière à être espacé de celui-ci, supporté par la colonne verticale, pouvant coulisser par rapport à la colonne verticale, et comprenant une matrice inférieure (53b) correspondant à la matrice supérieure ; une unité de réglage de précision (40) prévue sous l'unité de transfert de force d'élévation et ajustant si nécessaire un interstice entre la matrice supérieure et la matrice inférieure ; une pluralité de premiers bras de liaison (23) raccordés à la première partie d'axe excentrique (14c) de l'arbre principal, s'étendant vers le bas de manière à être reliés à l'unité de transfert de force d'élévation (31), et entraînés par rotation axiale de l'arbre principal de manière à transmettre un mouvement ascendant et descendant pour l'unité de transfert de force d'élévation (31), l'unité de réglage de précision (40), les colonnes verticales, et le corps surélevé supérieur ; et une pluralité de deuxièmes bras de liaison (25) raccordés à la deuxième partie d'axe excentrique (14b) de l'arbre principal (14), s'étendant vers le haut de manière à être raccordés au corps surélevé inférieur (53), et entraînés par rotation axiale de l'arbre principal de manière à élever ou à abaisser le corps surélevé inférieur.

2. Dispositif d'ébarbage pour un film d'électrode d'une batterie secondaire selon la revendication 1, où : une partie d'axe de support (14a), qui a le même axe de rotation central que l'axe de rotation central de l'arbre principal (14) en tant que tel et est supportée sur le cadre au moyen d'un élément antivibratoire d'arbre (21), est formée sur l'arbre principal ; la première et la deuxième parties d'axe excentrique forment des paires et sont présentées sur des côtés opposés depuis la partie d'axe de support ; et le centre de la première partie d'axe excentrique et le centre de la deuxième partie d'axe excentrique sont décalés de 180 degrés de l'axe de rotation central.

3. Dispositif d'ébarbage pour un film d'électrode d'une batterie secondaire selon la revendication 1, où l'unité d'entraînement comprend : un moteur principal (17) entraînant axialement en rotation l'arbre principal ; des poulies (16) fixées sur des parties d'extrémité d'arbres principaux respectifs ; et une courroie crantée (15) reliant les poulies entre elles de manière à faire tourner axialement les arbres principaux à la même vitesse.

4. Dispositif d'ébarbage pour un film d'électrode d'une batterie secondaire selon la revendication 4, où le premier bras de liaison comprend : une partie de raccordement d'arbre (23a) en prise avec la première partie d'axe excentrique, et une partie d'extension (23b) intégrée à la partie de raccordement d'arbre, s'étendant vers le bas, et pourvue d'une orifice de liaison sur une partie d'extrémité d'extension, l'unité de transfert de force d'élévation comprenant : un plateau élévateur (53a) ayant la forme d'une plaque rectangulaire, une pluralité de chemins verticaux, permettant le passage vers le bas de la partie d'extension du premier bras de liaison, étant formés dans le plateau élévateur ; et un support de bras (31) fixé sur une surface inférieure du plateau élévateur et présentant un orifice de réglage d'arbre correspondant à l'orifice de liaison en bas de la partie d'extension passant dans le chemin vertical, et l'unité de réglage de précision (40) étant disposée horizontalement sous les arbres principaux respectifs dans la direction verticale, pénétrant l'orifice de liaison et l'orifice de réglage d'arbre de manière à relier le premier bras de liaison à l'unité de transfert de force d'élévation, et comprenant : une paire d'arbres de réglage (41) pourvus de parties d'axe excentrique fines (41a) insérées dans l'orifice de liaison ; et un moteur de réglage d'interstice (43) entraînant axialement en rotation les orifices de réglage respectifs, simultanément.

5. Dispositif d'ébarbage pour un film d'électrode d'une batterie secondaire selon la revendication 4, où la partie d'axe excentrique fine (41a) est une partie ayant un axe excentrique décalé de l'axe de rotation central de l'arbre de réglage en tant que tel, et rotative axialement en contactant une surface circonférentielle intérieure de l'orifice de liaison de manière à modifier la hauteur de l'unité de transfert de force d'élévation (31).

6. Dispositif d'ébarbage pour un film d'électrode d'une batterie secondaire selon la revendication 5, où les poulies (16) sont fixées sur la partie d'extrémité des arbres de réglage respectifs, et les poulies sont raccordées l'une à l'autre au moyen de la courroie crantée (15) faisant tourner axialement l'arbre de réglage à la même vitesse de rotation.

7. Dispositif d'ébarbage pour un film d'électrode d'une batterie secondaire selon la revendication 1, où le deuxième bras de liaison (25) comprend : une partie de raccordement d'arbre (25a) en prise avec la deuxième partie d'axe excentrique de l'arbre principal ; et une partie d'extension (25b) intégrée à la partie de raccordement d'arbre, et s'étendant vers le haut de manière à être raccordée par broches au corps surélevé inférieur (53).
